# FASCICULE DE BREVET EUROPEEN

(11) **EP 3 061 634 B1**
(45) Date de publication et mention de la délivrance du brevet: **08.05.2019**
(21) Numéro de dépôt: 16154846.6
(22) Date de dépôt: 09.02.2016
(51) Int. Cl.: B60H 1/00

(54) **DISPOSITIF DE CHAUFFAGE, VENTILATION ET/OU CLIMATISATION POUR VÉHICULE AUTOMOBILE**
ANLAGE ZUR HEIZUNG, BELÜFTUNG UND/ODER KLIMATISIERUNG FÜR KRAFTFAHRZEUG
HEATING, VENTILATION AND/OR AIR CONDITIONING DEVICE FOR MOTOR VEHICLE

(30) Priorité: 25.02.2015 FR 1551601
(43) Date de publication de la demande: 31.08.2016
(73) Titulaire: VALEO SYSTEMES THERMIQUES, 78320 Le Mesnil Saint-Denis (FR)
(72) Inventeur: JOVET, Bastien, 73210 PEISEY- NANCROIX (FR); AILLOUD, Fabrice, 78280 GUYANCOURT (FR); LADRECH, Frédéric, 78310 MAUREPAS (FR); PIERRES, Philippe, 78990 ELANCOURT (FR)
(74) Mandataire: Metz, Gaëlle

(56) Documents cités:
- EP-A1- 1 457 363
- DE-A1-102012 018 537
- JP-A- 2005 104 185

## Description

### Domaine Technique de l'invention

L'invention concerne un dispositif de chauffage, ventilation et/ou climatisation pour véhicule automobile comprenant un boîtier et au moins un échangeur de chaleur. Les dispositifs selon l'invention ont notamment pour fonction de chauffer, de refroidir, de filtrer et/ou déshumidifier un flux d'air injecté dans l'habitacle d'un véhicule automobile.

### Etat de la technique antérieur

Les véhicules automobiles comportent classiquement un dispositif de chauffage, ventilation et/ou climatisation (communément appelé HVAC de l'anglais Heating, Ventilating and/or Air Conditioning et ci-après dénommé HVAC) pour traiter thermiquement un flux air, généralement issu d'un pulseur du groupe moto-ventilateur, afin de réchauffer ou refroidir l'habitacle du véhicule. Le dispositif de chauffage, ventilation et/ou climatisation comprend un circuit de fluide frigorigène munis d'échangeurs de chaleur aptes à échanger de la chaleur avec le flux d'air destiné à déboucher dans l'habitacle du véhicule, ainsi qu'un compresseur permettant de faire varier les propriétés physico-chimiques, notamment la pression et la température, du fluide frigorigène.

Pour diminuer la consommation énergétique d'un tel dispositif, il est connu d'équiper le dispositif HVAC d'un moyen de contournement de l'échangeur de chaleur apte à dévier une partie du flux d'air de l'échangeur de chaleur.

Les moyens de contournement se matérialisent généralement en un canal dit de contournement, ou de « by-pass » en anglais, qui s'étend parallèlement à un échangeur de chaleur et permet ainsi au flux d'air circulant dans le dispositif HVAC de contourner l'échangeur de chaleur. Etant donné que l'échangeur de chaleur est maintenu à l'aide des parois d'un boîtier du dispositif HVAC avec un joint d'étanchéité associé, le canal de contournement est formé au sein du boîtier du dispositif HVAC, avec une ouverture réalisée dans la paroi du boîtier maintenant l'échangeur de chaleur. Ainsi, le flux d'air détourné est mélangé en aval de l'échangeur de chaleur avec le flux d'air ayant traversé l'échangeur de chaleur afin d'obtenir la température de consigne souhaitée.

Avec de tels moyens de contournement, il est possible de faire fonctionner le compresseur de façon cyclique avec un meilleur rendement, en particulier lorsqu'il s'agit d'un compresseur à cylindrée variable. En effet, dans ce dernier cas, on fait fonctionner le compresseur seulement de façon cyclique avec une cylindrée élevée et donc un meilleur rendement.

Le document JP2005104185A divulgue un dispositif de chauffage, ventilation et/ou climatisation selon la préambule de la revendication 1.

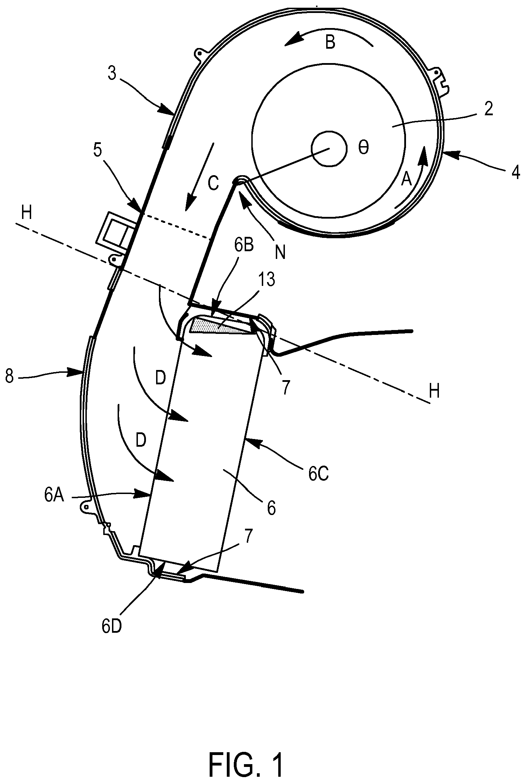

La figure 1 illustre une vue de haut d'une partie du dispositif de chauffage, ventilation et/ou climatisation selon l'art antérieur qui comprend un boîtier 3 englobant les différents éléments du dispositif. Dans une telle architecture, un flux d'air venant de l'extérieur ou de l'intérieur du véhicule, est aspiré par un pulseur 2 et est ainsi introduit au sein du boîtier 3. Le pulseur 2 est contenu dans une partie du boîtier 3 en forme de spirale, communément appelé volute 4, de manière à ce que le flux d'air aspiré soit orienté vers les parois de la volute 4, épousant ainsi la trajectoire circulaire définie par ces parois tel qu'illustré par les flèches A et B. La volute 4 présente une évolution radiale en partant d'un point N appelé le nez de la volute, sur une gamme d'angle θ, ici 360°. La volute 4 présente ensuite une sortie 5 de volute (délimitée par le trait en pointillés) ayant la forme d'un conduit rectiligne de manière à ce que le flux d'air sortant de la volute 4 suive cette même forme, comme illustré par la flèche C.

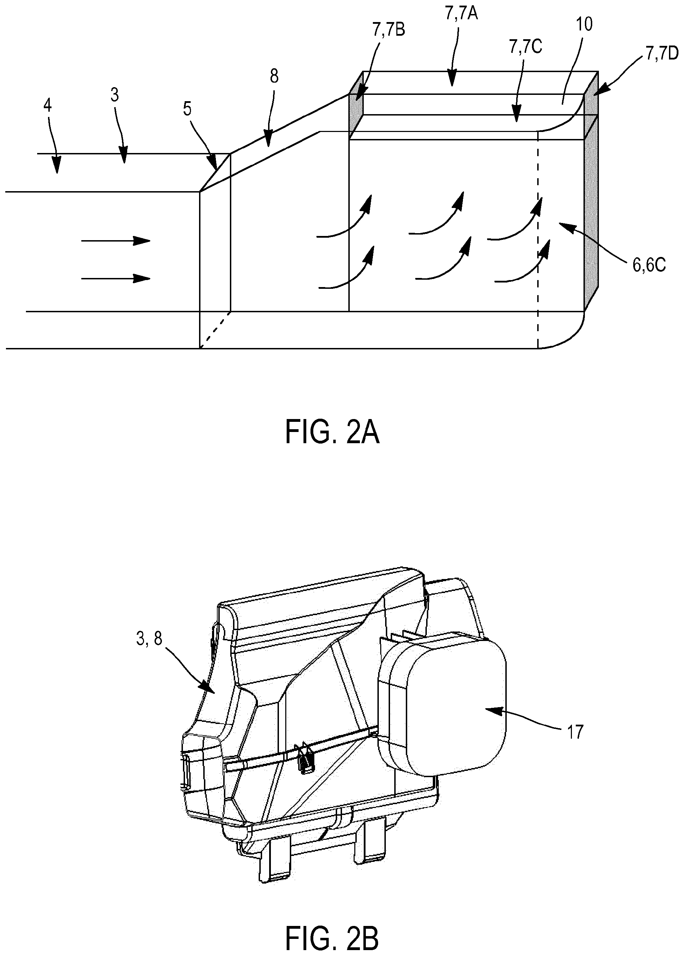

Une partie du boîtier 3 comprise entre la sortie de volute 5 et une partie 7 du boîtier 3 apte maintenir un échangeur de chaleur 6, notamment un évaporateur, est communément appelée un divergent 8. Le divergent 8 correspond à un conduit dans lequel le flux d'air sortit de la volute 4 est acheminé vers l'échangeur de chaleur 6. L'échangeur de chaleur 6, étant généralement plus grand en hauteur que le pulseur 2 et la volute 4, le divergent 8 présente un élargissement, par rapport à la volute 4, sur sa hauteur qui peut être net, sous la forme d'une marche, ou progressif, sous la forme d'une pente inclinée comme illustrée sur les figure 2A et 2B. Cet agrandissement est d'autant plus nécessaire lorsque le dispositif HVAC présente un canal de contournement 10 de l'échangeur de chaleur 6, ce qui requiert une hauteur plus élevée. Le flux d'air sortant de la volute 4 se répartit dans le conduit défini par le divergent 8 et le traverse de manière à ce qu'une partie du flux d'air puisse traverser l'échangeur de chaleur 6 et l'autre partie du flux d'air puisse passer par le canal de contournement 10. Le canal de contournement 10 s'étend au-dessus d'une paroi, ici la paroi supérieure, de l'échangeur de chaleur 6 avec l'entrée et la sortie du canal de contournement 10 étant situées du côté des faces transversales 6A, 6C de l'échangeur de chaleur 6. Le canal de contournement 10 est donc délimité par les parois du boîtier 3 et notamment les parois de la partie 7 du boîtier 3 situées du côté des faces latérales 6B, 6D de l'échangeur de chaleur 6. Tel que illustré sur la figure 2A, le canal de contournement 10 est délimité par les parois de la partie 7 du boîtier 3 et notamment les parois 7B et 7D, ici grisées par souci de clarté, agencées du côté des faces 6B, 6D de l'échangeur de chaleur 6, et les parois 7A et 7C agencées du côté des faces 6B, 6D de l'échangeur de chaleur 6.

Le divergent 8, tel que illustré sur la figure 2B, peut permettre d'autres fonctionnalités. Il peut, par exemple, comprendre un moyen d'accostage 17 permettant la fixation du boitier 3 au tablier du véhicule (non représenté).

Toutefois, avec un tel mode de réalisation, le flux d'air traverse un conduit rectiligne avant de déboucher directement sur l'échangeur de chaleur 6 adoptant ainsi une trajectoire en coude comme illustré par les flèches D sur la figure 1. Le flux d'air ne pourra donc pas se répartir de manière homogène dans le canal de contournement 10 avec notamment une partie 13 du canal de contournement 10, ici grisée, n'étant sera pas traversé par le flux d'air comme illustré sur la figure 1. Cela implique que l'appel d'air, créé par l'agrandissement du divergent 8 et l'entrée du canal de contournement 10, est insuffisant pour entraîner une quantité d'air suffisante à travers le canal de contournement 10. Il en résulte que le compresseur doit fonctionner de manière plus récurrente diminuant ainsi le rendement global.

Une solution connue est d'agrandir la hauteur du canal. Toutefois, les dispositifs de chauffage, ventilation et/ou climatisation sont généralement installés en dessous de la planche de bord ce qui implique un espace très réduit et donc une difficulté d'intégration.

### Exposé de l'invention

La présente invention vise à optimiser l'encombrement d'un dispositif de chauffage, ventilation et/ou climatisation d'un habitacle de véhicule automobile tout en améliorant le rendement du compresseur.

A cet effet, l'invention a pour objet un dispositif de chauffage, ventilation et/ou climatisation pour véhicule automobile comprenant un boîtier, au moins un échangeur de chaleur et un canal de contournement comprenant une entrée, apte à dévier une partie d'un flux d'air traversant l'échangeur de chaleur. Selon l'invention, l'entrée du canal de contournement s'étend au moins partiellement le long de deux faces de l'échangeur de chaleur, une partie du boîtier présente un évasement selon une direction verticale et/ou selon une direction transversale, ladite partie étant disposée entre une sortie d'une volute du boîtier, ladite volute étant située en amont par rapport au flux d'air, et une partie du boîtier apte à maintenir l'échangeur de chaleur, ladite partie étant située en aval par rapport au flux d'air.

Autrement dit, l'entrée du canal de contournement s'étend de manière adjacente à deux faces de l'échangeur de chaleur. Plus spécifiquement, une fois le dispositif de chauffage installé dans le véhicule, l'entrée du canal de contournement s'étend au-dessus de deux faces de l'échangeur. De cette manière, la section d'entrée du canal de contournement est plus importante sans avoir à agrandir la hauteur du canal de contournement. La section d'entrée étant plus importante, il en résulte que le débit de flux d'air pouvant passer par le canal de contournement augmente et l'appel d'air créé par le canal de contournement est ainsi meilleur que dans les boîtiers connus de l'art antérieur. De plus, le flux d'air entrant dans le canal de contournement sur deux faces permet de garantir que l'intégralité du canal de contournement sera traversée par le flux d'air.

Des modes de réalisations particuliers selon l'invention proposent que :
- les deux faces de l'échangeur de chaleur sont contigües ;
- une partie du boîtier définit un canal partiellement en forme de L, ladite partie étant disposée entre une sortie d'une volute du boîtier, ladite volute étant située en amont par rapport au flux d'air, et une partie du boitier apte à maintenir l'échangeur de chaleur, ladite partie apte à maintenir l'échangeur de chaleur étant située en aval par rapport au flux d'air ;
- le dispositif comprend des moyens de déflections de un flux d'air ;
- les moyens de déflections sont des aubages ;
- le dispositif comprend quatre aubages répartis de manière régulière sur la paroi supérieure du boîtier ;
- un volet est disposé dans le canal de contournement, le volet étant apte à adopter une position entre une position de fermeture dans laquelle aucun flux d'air n'est dévié de l'échangeur de chaleur et une multitude de positions d'ouverture dans lesquelles une partie du flux d'air est déviée de l'échangeur de chaleur en fonction de la position d'ouverture ;
- le dispositif comprend un moyen d'accostage.

### Brève description des figures

D'autres caractéristiques et avantages de l'invention ressortiront à la lecture de la description qui suit, en référence aux figures annexées, qui illustrent :
- La figure 1 illustre une vue de haut d'une partie du dispositif de chauffage, ventilation et/ou climatisation selon l'art antérieur ;
- Les figures 2A et 2B illustrent une vue de côté selon l'axe H-H de la partie du dispositif selon la figure 1 ;
- La figure 3 illustre une vue de haut d'une partie du dispositif de chauffage, ventilation et/ou climatisation selon l'invention ;
- Les figures 4A à 4D illustrent de manière schématique différents modes de réalisation du divergent ;
- La figure 5 illustre une des parois latérales du divergent ;
- La figure 6 illustre une vue de côté selon l'axe J-J de la partie du dispositif selon de la figure 3 ;
- La figure 7 illustre une vue de haut d'une partie du dispositif de chauffage, ventilation et/ou climatisation selon un autre mode de réalisation;
- La figure 8 illustre une vue de profil d'une partie du dispositif de chauffage, ventilation et/ou climatisation selon l'invention ;
- La figure 9 illustre une vue de côté de la partie du dispositif selon la figure 3.

Par souci de clarté, les éléments de l'art antérieur et de la présente invention faisant référence aux mêmes objets garderont les mêmes références numériques.

### Description détaillée des modes de réalisation

Dans la présente description, on entend par « en amont » qu'un élément est placé avant un autre par rapport au sens de circulation du fluide. A contrario, on entend par « en aval » qu'un élément est placé après un autre par rapport au sens de circulation du fluide. Par supérieur, inférieur, haut et bas, on se réfère à la disposition des éléments sur les figures, ce qui correspond généralement à la disposition des éléments à l'état monté dans un véhicule automobile.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Le dispositif 1 de chauffage, ventilation et/ou climatisation selon l'invention comprend un boitier 3 comprenant les différents éléments dudit dispositif en particulier un échangeur de chaleur 6 apte à former un évaporateur. L'échangeur de chaleur 6 est par exemple formé d'une succession de tubes plats empilés et brasés ensemble à l'intérieur desquels circule un fluide caloporteur.

L'échangeur de chaleur 6 est traversé par un flux d'air qui cède ses calories au fluide caloporteur et est ainsi refroidi. Entre les tubes plats sont généralement disposées des ailettes permettant d'augmenter la surface d'échange avec le flux d'air qui traverse l'échangeur de chaleur 6.

Bien entendu, le dispositif 1 peut comporter d'autres échangeurs de chaleur, notamment un échangeur apte à former un condenseur ou encore un radiateur de chauffage.

Selon une variante, l'échangeur de chaleur 6 peut être un évaporateur simple ou un évaporateur-stockeur ayant une fonction additionnelle de stockage de l'énergie frigorifique selon une autre variante.

L'échangeur de chaleur 6 est maintenu dans le boîtier 3, par exemple, réalisé en matière plastique. Le boîtier 3 comprend au moins trois parties à savoir une volute 4, un divergent 8 situé en aval de la volute 4, et une partie 7 du boîtier 3 située en aval du divergent 8 et maintenant l'échangeur de chaleur 6.

Le dispositif 1 de chauffage, ventilation et/ou air conditionné comprend de plus, adjacent à l'échangeur de chaleur 6, un canal de contournement 10 apte à dévier de l'échangeur de chaleur 6 au moins une partie dudit flux d'air empêchant ainsi le flux d'air d'être traité thermiquement par l'échangeur de chaleur.

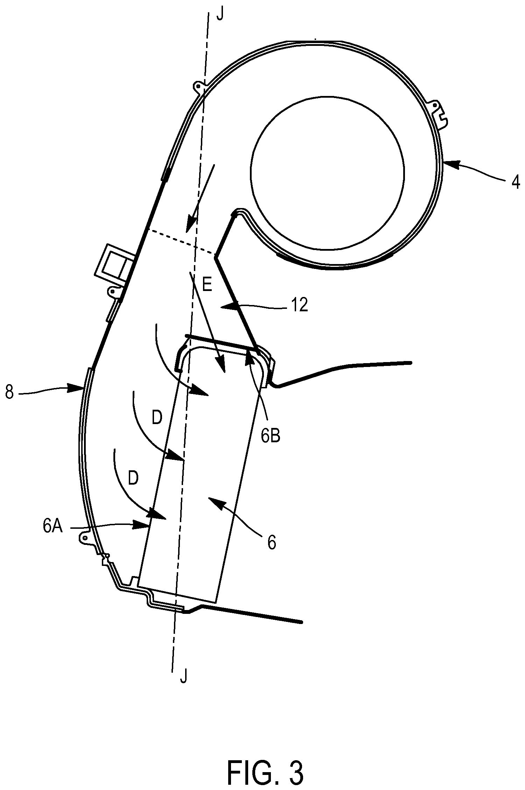

Selon un premier mode de réalisation tel qu'illustré à la figure 3, le divergent 8 a une forme divergente et présente un évasement 12 permettant au flux d'air sortant de la volute 4 d'accéder au canal de contournement 10, avec une section d'entrée située ici au-dessus de la face latérale 6B et au-dessus de la face transversale 6A de l'échangeur de chaleur 6. Ainsi, l'entrée du canal de contournement 10 s'étend au-dessus de deux faces contigües de l'échangeur de chaleur 6. Avec un tel boîtier 3, le flux d'air sortant de la volute 4 n'a plus besoin d'adopter une trajectoire en coude comme illustrée à la figure 1, mais peut mieux se répartir dans le canal défini par le divergent 8 en amont de l'échangeur de chaleur 6 et adopter une trajectoire plus linéaire en direction du canal de contournement 10, comme illustré par la flèche E sur la figure 3. De plus, ceci limite les pertes de charges et on s'assure par la même occasion que le flux d'air est apte à traverser l'intégralité de l'espace disponible dans le canal de contournement.

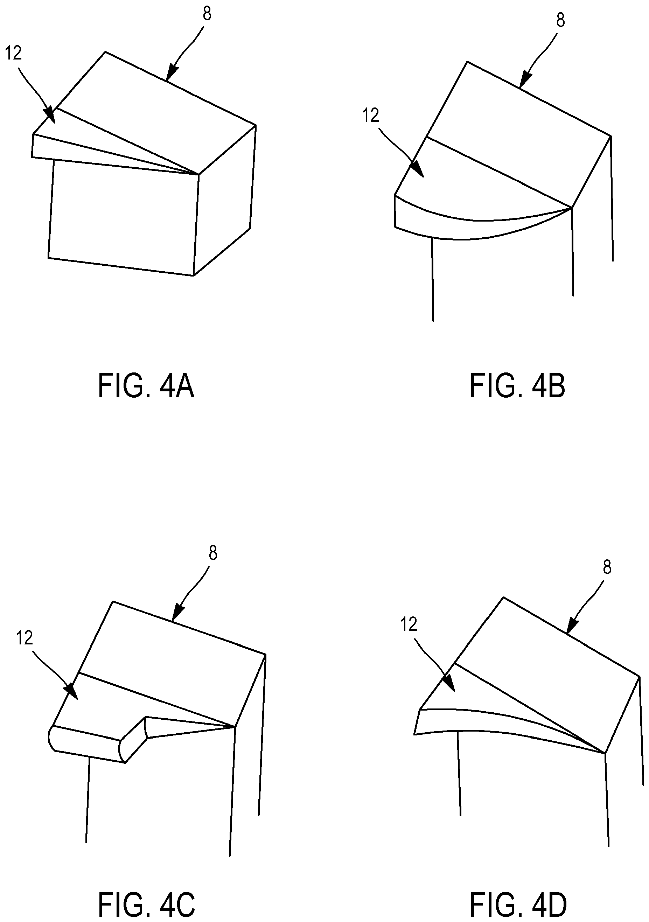

L'évasement 12 peut avoir différentes formes divergentes, comme illustrées aux figures 4A à 4AD telle une forme pyramidale (figure 4A), en forme d'un quart de disque (figure 4B), en forme tronconique (figure 4C) ou toute autre forme volumique envisageable.

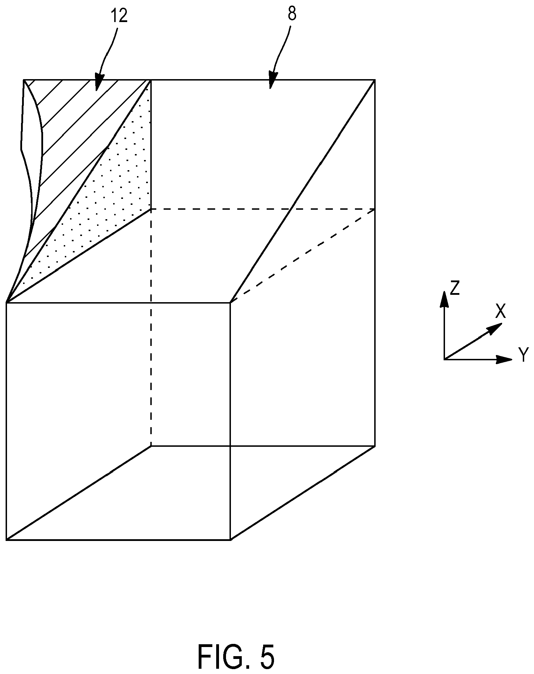

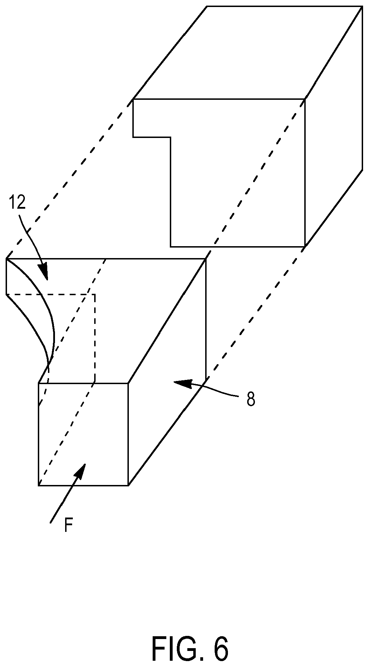

Comme illustré à la figure 5, une partie du divergent 8 présente non seulement un évasement 12 de sa section mais également un agrandissement dans le sens de sa hauteur. En prenant la direction longitudinale du divergent, ou même la direction du flux d'air sortant de la volute, comme axe X et les axes Y et Z perpendiculaires à cette direction, nous pouvons voir que le divergent 8 a une section évolutive divergente selon les axes Z (en pointillé) et Y (en rayé). En d'autres termes, le divergent 8 présente un évasement 12 selon une direction verticale (axe Y) et selon une direction transversale (axe Z). On peut considérer, par conséquent, que la section de passage du flux d'air F est en forme de L entre la sortie de la volute 4 et l'échangeur de chaleur 6 comme illustré sur la figure 6.

Bien que l'entrée du canal de contournement soit agencée au-dessus de deux faces de l'échangeur de chaleur 6 limitant ainsi les pertes de charges, en rajoutant des moyens de déflections 14 du flux d'air dans la partie supérieure du divergent, il est possible d'homogénéiser le débit d'air traversant le canal de contournement et de s'assurer ainsi que l'espace disponible pour le contournement de l'échangeur de chaleur 6 soit intégralement traversé par le flux d'air diminuant ainsi les pertes de charges.

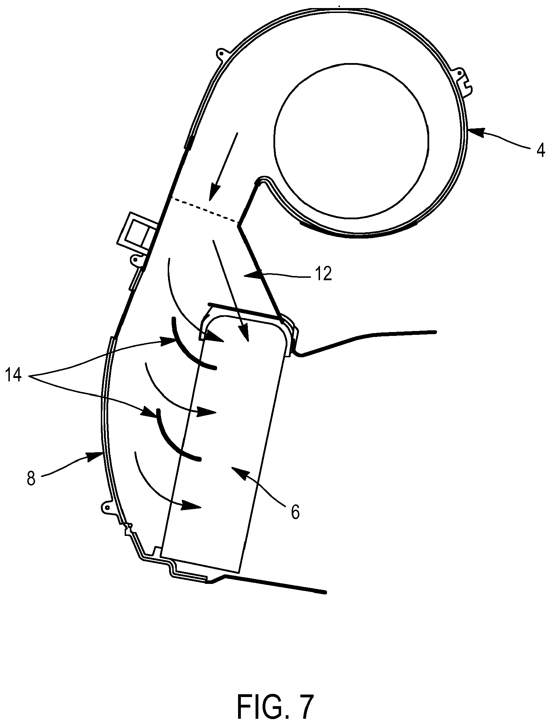

Les moyens de déflections 14 peuvent prendre différentes formes. Dans le mode de réalisation illustré à la figure 7, les moyens de déflections 14 correspondent à des parois arrondies agencées sur la paroi supérieure du divergent 8. Ici, les parois sont arrondies en forme de quart de cercle. Bien sûr d'autres moyens de déflections sont envisageables tels que des aubages ou des parois planes. Ces moyens de déflections 14 favorisent l'entrée du flux d'air au sein du canal de contournement. Ils peuvent être présents uniquement sur la paroi supérieure du divergent 8 et s'arrêter à l'entrée du canal de contournement selon un mode non représenté, ou se prolonger également à travers le canal de contournement tel qu'illustré sur la figure 7.

Le nombre de moyens de déflections 14 est variable, il est possible d'installer deux parois arrondies tel que représenté à la figure 7, mais selon un mode non illustré il est aussi possible d'ajouter plus de parois et ce de manière régulière. Il est aussi possible d'agencer les moyens de déflection 14 de manière irrégulière par exemple si on estime qu'une zone du canal de contournement n'est pas suffisamment traversée par le flux d'air.

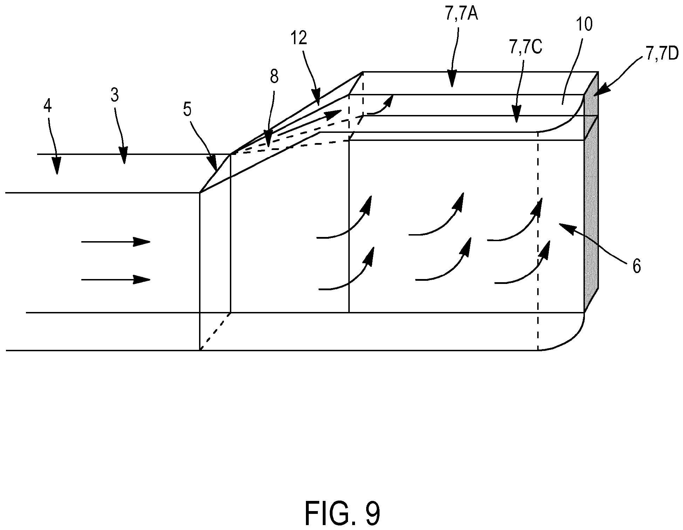

Comme on le voit sur la figure 9, le canal de contournement 10, défini par les parois 7A, 7C, et 7D de la partie 7 du boitier 3, s'étend au-dessus de la face supérieure de l'échangeur de chaleur 6. Il est ainsi possible de limiter la quantité de condensats qui sont naturellement entraînés vers le bas du boîtier.

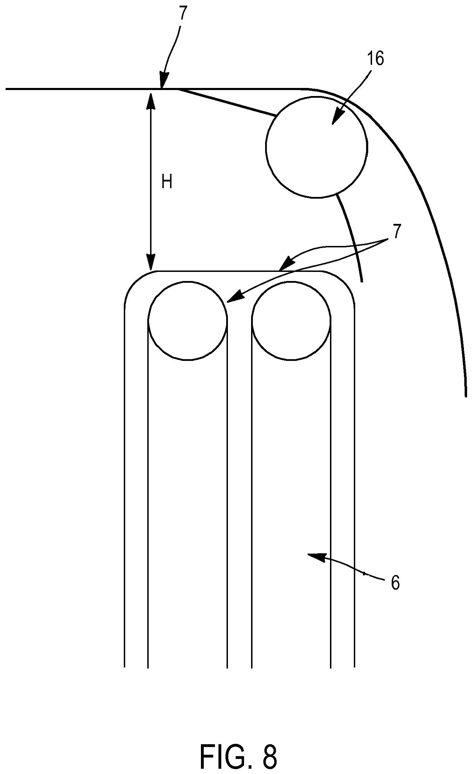

Afin de pouvoir réguler le flux d'air contournant l'échangeur de chaleur 6, un volet 16 est disposé dans le canal de contournement 9 et contrôlable en position entre une position de fermeture (comme représenté sur la figure 8) dans laquelle aucun flux d'air n'est dévié de l'échangeur de chaleur 6 et une multitude de positions d'ouverture dans lesquelles une partie du flux d'air est déviée de l'échangeur de chaleur 6 en fonction de la position d'ouverture.

Bien entendu, la position du volet 16 peut être ajustée par un moteur électrique, typiquement un moteur pas-à-pas, afin d'atteindre selon les besoins des positions d'ouverture intermédiaires, situées entre lesdites positions extrêmes.

Selon le mode de réalisation illustré sur les figures, le volet 16 est disposé en aval de l'entrée du canal de contournement 10.

En variante, le volet 16 peut être agencé au niveau de l'entrée du canal de contournement 10.

Ainsi, le canal de contournement 10 forme une fente ayant une section transversale rectangulaire et possédant une hauteur H comprise entre 5 et 30 mm, de préférence 20 mm.

Le fait de supprimer la paroi latérale 7B de la partie 7 du boitier 3 apte à maintenir l'échangeur de chaleur 6 pour en faire une entrée du canal de contournement et de changer la forme du divergent 8 permet de réduire la hauteur H du canal de contournement 10 et le volet 16 de régulation peut être disposé plus près de l'échangeur de chaleur 6 de sorte que l'on peut diminuer l'encombrement du dispositif 1 de chauffage, ventilation et/ou climatisation.

Le divergent 8 selon l'invention peut permettre d'autres fonctionnalités. Selon un mode de réalisation non illustré, le divergent 8 peut notamment comprendre un moyen d'accostage permettant la fixation du boîtier du dispositif de chauffage au tablier du véhicule.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

## Revendications

1. Dispositif (1) de chauffage, ventilation et/ou climatisation pour véhicule automobile comprenant un boîtier (3), au moins un échangeur de chaleur (6) et un canal de contournement (10) comportant une entrée, ledit canal étant apte à dévier une partie d'un flux d'air traversant l'échangeur de chaleur (6) l'entrée du canal de contournement (10) s'étendant au moins partiellement le long de deux faces de l'échangeur de chaleur (6), **caractérisé en ce qu'**une partie (8) du boîtier (3) présente un évasement (12) selon une direction verticale et/ou selon une direction transversale, ladite partie (8) étant disposée entre une sortie (5) d'une volute (4) du boîtier (3), ladite volute étant située en amont par rapport au flux d'air, et une partie (7) du boitier (3) apte à maintenir l'échangeur de chaleur (6), ladite partie (7) apte à maintenir l'échangeur de chaleur (6) étant située en aval par rapport au flux d'air.

2. Dispositif selon la revendication 1, **caractérisé en ce que** les deux faces de l'échangeur de chaleur (6) sont contigües.

3. Dispositif selon l'une des revendications précédente, **caractérisé en ce qu'**une partie (8) du boîtier (3) définit un canal partiellement en forme de L, ladite partie (8) étant disposée entre une sortie (5) d'une volute (4) du boîtier (3), ladite volute étant située en amont par rapport au flux d'air, et une partie (7) du boitier (3) apte à maintenir l'échangeur de chaleur (6), ladite partie (7) apte à maintenir l'échangeur de chaleur (6) étant située en aval par rapport au flux d'air.

4. Dispositif selon l'une des revendications précédentes, **caractérisé en ce qu'**il comprend des moyens de déflections (14) du flux d'air.

5. Dispositif selon la revendication 4, **caractérisé en ce que** les moyens de déflections (14) sont des aubages.

6. Dispositif selon la revendication 5, **caractérisé en ce que** le boîtier comprend quatre aubages répartis de manière régulière sur la paroi supérieure du boîtier (3).

7. Dispositif selon l'une des revendications précédentes, **caractérisé en ce qu'**un volet (16) est disposé dans le canal de contournement (10), le volet (16) étant apte à adopter une position entre une position de fermeture dans laquelle aucun flux d'air n'est dévié de l'échangeur de chaleur (6) et une multitude de positions d'ouverture dans lesquelles une partie du flux d'air est déviée de l'échangeur de chaleur (6) en fonction de la position d'ouverture.

8. Dispositif selon l'une des revendications précédentes, **caractérisé en ce qu'**il comprend un moyen d'accostage.

## Patentansprüche

1. Heiz-, Belüftungs- und/oder Klimatisierungsvorrichtung für Kraftfahrzeug, die ein Gehäuse (3), wenigstens einen Wärmetauscher (6) und einen Umleitungskanal (10), der einen Einlass aufweist, umfasst, wobei der Kanal dafür ausgelegt ist, einen Teil eines den Wärmetauscher (6) durchquerenden Luftstroms umzuleiten, wobei sich der Einlass des Umleitungskanals (10) wenigstens teilweise längs zweier Flächen des Wärmetauschers (6) erstreckt, **dadurch gekennzeichnet, dass** ein Teil (8) des Gehäuses (3) eine Erweiterung (12) in vertikaler und/oder transversaler Richtung aufweist, wobei der Teil (8) zwischen einem Auslass (5) einer Spirale (4) des Gehäuses (3), wobei die Spirale in Bezug auf den Luftstrom stromaufseitig angeordnet ist, und einem Teil (7) des Gehäuses (3), der den Wärmetauscher (6) halten kann, angeordnet ist, wobei der Teil (7), der den Wärmetauscher (6) halten kann, in Bezug auf den Luftstrom stromabseitig angeordnet ist.

2. Vorrichtung nach Anspruch 1, **dadurch gekennzeichnet, dass** die beiden Flächen des Wärmetauschers (6) benachbart sind.

3. Vorrichtung nach einem der vorhergehenden Ansprüche, **dadurch gekennzeichnet, dass** ein Teil (8) des Gehäuses (3) einen Kanal definiert, der teilweise die Form eines L hat, wobei der Teil (8) zwischen einem Auslass (5) einer Spirale (4) des Gehäuses (3), wobei die Spirale in Bezug auf den Luftstrom stromaufseitig angeordnet ist, und einem Teil (7) des Gehäuses (3), der den Wärmetauscher (6) halten kann, angeordnet ist, wobei der Teil (7), der den Wärmetauscher (6) halten kann, in Bezug auf den Luftstrom stromabseitig angeordnet ist.

4. Vorrichtung nach einem der vorhergehenden Ansprüche, **dadurch gekennzeichnet, dass** er Mittel (14) für die Ablenkung des Luftstroms umfasst.

5. Vorrichtung nach Anspruch 4, **dadurch gekennzeichnet, dass** die Ablenkungsmittel (14) Schaufeln sind.

6. Vorrichtung nach Anspruch 5, **dadurch gekennzeichnet, dass** das Gehäuse vier Schaufeln aufweist, die an der oberen Wand des Gehäuses (3) regelmäßig verteilt sind.

7. Vorrichtung nach einem der vorhergehenden Ansprüche, **dadurch gekennzeichnet, dass** in dem Umleitungskanal (10) eine Klappe (16) angeordnet ist, wobei die Klappe (16) eine Position zwischen einer Verschlussposition, in der kein Luftstrom um den Wärmetauscher (2) umgeleitet wird, und mehreren Öffnungspositionen, in denen ein Teil des Luftstroms als Funktion der Öffnungsposition um den Wärmetauscher (6) umgeleitet wird, einnehmen kann.

8. Vorrichtung nach einem der vorhergehenden Ansprüche, **dadurch gekennzeichnet, dass** sie ein Kopplungsmittel umfasst.

## Claims

1. Heating, ventilation and/or air conditioning device (1) for a motor vehicle, comprising a housing (3), at least one heat exchanger (6) and a bypass duct (10) comprising an inlet, the said duct being able to divert part of an air flow passing through the heat exchanger (6), the inlet of the bypass duct (10) extending at least partially along two faces of the heat exchanger (6), **characterized in that** a part (8) of the housing (3) is flared (12) in a vertical direction and/or in a transverse direction, the said part (8) being arranged between an outlet (5) of a blower housing (4) part of the housing (3), the said blower housing being situated upstream with respect to the air flow, and a part (7) of the housing (3) able to hold the heat exchanger (6), the said part (7) able to hold the heat exchanger (6) being situated downstream with respect to the air flow.

2. Device according to Claim 1, **characterized in that** the two faces of the heat exchanger (6) are contiguous.

3. Device according to one of the preceding claims, **characterized in that** a part (8) of the housing (3) defines a partially L-shaped duct, the said part (8) being arranged between an outlet (5) of a blower housing (4) part of the housing (3), the said blower housing being situated upstream with respect to the air flow, and a part (7) of the housing (3) able to hold the heat exchanger (6), the said part (7) able to hold the heat exchanger (6) being situated downstream with respect to the air flow.

4. Device according to one of the preceding claims, **characterized in that** it comprises means (14) for deflecting the air flow.

5. Device according to Claim 4, **characterized in that** the deflection means (14) are vanes.

6. Device according to Claim 5, **characterized in that** the housing comprises four vanes uniformly distributed over the upper wall of the housing (3).

7. Device according to one of the preceding claims, **characterized in that** a flap (16) is arranged in the bypass duct (10), the flap (16) being able to adopt a position out of a closed position in which no air flow is diverted from the heat exchanger (6), and a multitude of open positions in which part of the air flow is diverted from the heat exchanger (6) according to which open position.

8. Device according to one of the preceding claims, **characterized in that** it comprises a mounting means.
